# EUROPEAN PATENT SPECIFICATION

(11) **EP 4 628 380 B1**
(45) Date of publication and mention of the grant of the patent: **11.11.2026**
(21) Application number: 23909258.8
(22) Date of filing: 28.08.2023
(51) Int. Cl.: B60W 30/095, G01S 13/931, G01S 13/86, G01S 7/04, G01S 7/295, G01S 7/00, G01S 13/42, G01S 13/87, B60W 50/14, G06V 20/56, G08G 1/16

(54) **VEHICLE RADAR EARLY WARNING METHOD AND SYSTEM, STORAGE MEDIUM AND ELECTRONIC DEVICE**
VERFAHREN UND SYSTEM ZUR FAHRZEUGRADARFRÜHWARNUNG, SPEICHERMEDIUM UND ELEKTRONISCHE VORRICHTUNG
PROCÉDÉ ET SYSTÈME D'ALERTE PRÉCOCE PAR RADAR DE VÉHICULE, SUPPORT DE STOCKAGE ET DISPOSITIF ÉLECTRONIQUE

(30) Priority: 26.12.2022 CN 202211678074
(43) Date of publication of application: 08.10.2025
(73) Proprietor: Guangzhou Automobile Group Co., Ltd., Guangzhou, Guangdong 510030 (CN)
(72) Inventor: SUN, Jiahui, Guangzhou, Guangdong 511434 (CN); ZHU, Guanghuan, Guangzhou, Guangdong 511434 (CN); TIAN, Shuai, Guangzhou, Guangdong 511434 (CN); LIU, Chunbao, Guangzhou, Guangdong 511434 (CN)
(74) Representative: Zaboliene, Reda
(86) International application number: PCT/CN2023/115334
(87) International publication number: WO 2024/139318

(56) References cited:
- WO-A1-2022/011808
- CN-A- 106 204 687
- CN-A- 106 772 383
- CN-A- 111 845 559
- CN-A- 112 639 821
- CN-A- 113 960 603
- CN-A- 115 273 022
- DE-A1- 102008 064 361
- DE-B3- 102007 032 698
- KR-A- 20110 062 439
- US-A1- 2011 026 771
- YANG JIACHEN ET AL: "Driving assistance system based on data fusion of multisource sensors for autonomous unmanned ground vehicles", vol. 192, 1 June 2021 (2021-06-01), AMSTERDAM, NL, pages 108053, XP093095602, ISSN: 1389-1286, Retrieved from the Internet <URL:https://pdf.sciencedirectassets.com/271990/1-s2.0-S1389128621X00072/1-s2.0-S1389128621001511/main.pdf?X-Amz-Security-Token=IQoJb3JpZ2luX2VjEE4aCXVzLWVhc3QtMSJHMEUCIQCs3nDk2bI1/u71ILeDgg64NEbSN0W62LvpC/ltLAHXwwIgUcXNEm2ANsp+sgRAzaaxBm70F6FxzupNFTiXJPtKFAEqswUIdxAFGgwwNTkwMDM1NDY4NjUiDJaIFk4m5jqwQolpb> [retrieved on 20260220], DOI: 10.1016/j.comnet.2021.108053

## Description

The present application claims a priority of a Chinese patent application filed with the China National Intellectual Property Administration on December 26, 2022, with an application number 202211678074.1, and titled "VEHICLE RADAR EARLY WARNING METHOD AND SYSTEM, STORAGE MEDIUM AND ELECTRONIC DEVICE".

### TECHNICAL FIELD

The present application relates to a field of vehicle radar early warning technology, and in particular to a vehicle radar early warning method and system, a storage medium, and an electronic device.

### BACKGROUND

Radar warning functions use eight reversing radars at a front and a rear of an vehicle and four parking radars on a left side and a right side of the vehicle to simultaneously detect a distance and a direction of obstacles around the vehicle, and simultaneously display a warning of obstacle lines on a panoramic bird's-eye view spliced by four surround-view cameras, thereby improving the vehicle's safety performance and serving as a warning to a driver when driving and parking.

At present, the radar warning functions are widely installed on various types of vehicles, but the existing radar warning functions all use radar distance values to project onto a plane of the panoramic bird's-eye view, depicting them as segmented straight lines or segmented curves, which are incoherent, have poor visual sensory effects, are not beautiful, and have unclear warnings for tiny obstacles, which cannot effectively alert the driver and affect an experience of a panoramic imaging function. It is noted that the following prior art documents have been cited during the examination of the present application: D1: CN 112 639 821 A (Huawei Technologies Co., Ltd.), published on 9 April 2021, discloses a method for detecting a vehicle's drivable area, using a neural network to process image data in combination with radar echo signals to obtain obstacle probability distributions, and representing the drivable area in the form of a probability grid map. D2: CN 106 772 383 A (Zhiche Auto Technology (Beijing) Co., Ltd.), published on 31 May 2017, discloses a method for detecting and presenting objects around a vehicle, using radar to detect obstacles and drawing multiple alarm lines using Bezier curves to indicate obstacle distances. D3: DE 10 2007 032 698 B3 (Porsche AG), published on 25 September 2008, discloses a method for generating a display image for a parking assistance system, determining Bezier curves based on distance measurement values from multiple sensors to smoothly represent obstacle contours. D4: DE 10 2008 064 361 A1 (Volkswagen AG), published on 24 June 2010, discloses a method for visualizing the direct surroundings of a vehicle, displaying obstacle positions and distances by elastically deforming a graphical structure (e.g., annular curves). D5: Yang Jiachen et al., "Driving assistance system based on data fusion of multisource sensors for autonomous unmanned ground vehicles", ARXIV, vol. 192, 1 June 2021, page 108053, discloses a driving assistance system based on multi-sensor data fusion, including the fusion of panoramic bird's-eye view images with ultrasonic radar data. D6: CN 111 845 559 A (Autoequips Tech Co., Ltd.), published on 30 October 2020, discloses an image integration warning system for a vehicle, integrating a virtual warning range into a panoramic surrounding-view image and displaying approaching obstacles as warning blocks based on sensing information. Among these documents, D1 is considered the closest prior art.

### SUMMARY

The purpose of the present application is to provide an early warning method for a vehicle radar and a system, a computer-readable storage medium, and an electronic device to optimize a display effect of radar warning obstacles.

To achieve the above purpose, according to a first aspect of the present application, an early warning method for a vehicle radar is provided, the method comprising:
An early warning method for a vehicle radar, characterized in that, the method comprises:
Obtaining spatial coordinate values of at least one obstacle output by the vehicle radar, and obtaining two-dimensional coordinate values of the at least one obstacle by performing a coordinate conversion on the spatial coordinate values of the at least one obstacle;
Selecting at least two obstacle points as control points of a Bezier curve according to the two-dimensional coordinate values of the at least one obstacle;
Correspondingly generating the Bezier curve according to two-dimensional coordinate values corresponding to the at least two control points;
Obtaining a panoramic bird's-eye view output by an image unit of a vehicle;
Obtaining a radar warning display image by fusing the Bezier curve with the panoramic bird's-eye view, and outputting the radar warning display image to a display unit of the vehicle for display.

Optionally, selecting at least two obstacle points as control points of the Bezier curve according to the two-dimensional coordinate values of the at least one obstacle comprises:
Determining a vehicle surrounding area where the at least one obstacle is located according to the two-dimensional coordinate values of the at least one obstacle, wherein a surrounding environment of the vehicle is divided into a plurality of vehicle surrounding areas;
When there is at least one obstacle in one vehicle surrounding area and there is no obstacle in adjacent vehicle surrounding areas of the one vehicle surrounding area, selecting at least two obstacle points as a group of control points of the Bezier curve corresponding to the one vehicle surrounding area, according to the two-dimensional coordinate values of the at least one obstacle in the one vehicle surrounding area;
When there is at least one obstacle in each of at least two adjacent vehicle surrounding areas, selecting at least two obstacle points as a group of control points of a Bezier curve corresponding to the at least two adjacent vehicle surrounding areas, according to the two-dimensional coordinate values of the at least one obstacle in each of the at least two adjacent vehicle surrounding areas.

Optionally, selecting at least two obstacle points as control points of the Bezier curve according to the two-dimensional coordinate values of the at least one obstacle comprises:
Selecting at least two obstacle points on the obstacle that are closest to an edge of the vehicle and are in a maximum boundary range on a two-dimensional projection surface as the control points of the Bezier curve.

Optionally, wherein correspondingly generating the Bezier curve according to two-dimensional coordinate values corresponding to the at least two control points comprises:
Correspondingly generating one Bezier curve using each group of control points.

Optionally, the vehicle radar comprises a first reversing radar module arranged at a front of the vehicle, a second reversing radar module arranged at a rear of the vehicle, a first parking radar module arranged at a left of the vehicle, and a second parking radar module arranged at a right of the vehicle.

According to a second aspect of the present application, an early warning system for a vehicle radar is provided, the system comprises:
A radar signal obtaining unit, configured to obtain spatial coordinate values of at least one obstacle output by the vehicle radar, and obtain two-dimensional coordinate values of the at least one obstacle by performing a coordinate conversion on the spatial coordinate values of the at least one obstacle;
A control point obtaining unit, configured to select at least two obstacle points as control points of a Bezier curve according to the two-dimensional coordinate values of the at least one obstacle;
A curve generating unit, configured to correspondingly generate the Bezier curve according to two-dimensional coordinate values corresponding to the at least two control points;
A panoramic image obtaining unit, configured to obtain a panoramic bird's-eye view output by an image unit of a vehicle;
A warning image generating unit, configured to obtain a radar warning display image by fusing the Bezier curve with the panoramic bird's-eye view, and output the radar warning display image to a display unit of the vehicle for display.

Optionally, the control point obtaining unit is configured to:
Determine a vehicle surrounding area where the at least one obstacle is located according to the two-dimensional coordinate values of the at least one obstacle, wherein a surrounding environment of the vehicle is divided into a plurality of vehicle surrounding areas;
When there is at least one obstacle in one vehicle surrounding area and there is no obstacle in adjacent vehicle surrounding areas of the one vehicle surrounding area, select at least two obstacle points as a group of control points of the Bezier curve corresponding to the one vehicle surrounding area, according to the two-dimensional coordinate values of the at least one obstacle in the one vehicle surrounding area;
When there is at least one obstacle in each of at least two adjacent vehicle surrounding areas, select at least two obstacle points as a group of control points of a Bezier curve corresponding to the at least two adjacent vehicle surrounding areas, according to the two-dimensional coordinate values of the at least one obstacle in each of the at least two adjacent vehicle surrounding areas.

Optionally, the control point obtaining unit is configured to:
Select at least two obstacle points on the obstacle that are closest to an edge of the vehicle and are in a maximum boundary range on a two-dimensional projection surface as the control points of the Bezier curve;
The curve generating unit is configured to correspondingly generate one Bezier curve using each group of control points.

Optionally, the vehicle radar comprises a first reversing radar module arranged at a front of the vehicle, a second reversing radar module arranged at a rear of the vehicle, a first parking radar module arranged at a left of the vehicle, and a second parking radar module arranged at a right of the vehicle.

According to a third aspect of the present application, a computer-readable storage medium is provided, the computer-readable storage medium stores a computer program, and when the computer program is executed by a processor, the early warning system for the vehicle radar is implemented.

According to a fourth aspect of the present application, an electronic device is provided, the electronic device comprises a processor, a storage device, and a computer program stored in the storage device and executable on the processor, wherein when the processor executes the computer program, the early warning system for the vehicle radar is implemented.

The above solution of the present application has the following beneficial effects:
The present application converts the spatial coordinate values of at least one obstacle detected by the vehicle radar into two-dimensional coordinate values, generates the Bezier curve of the obstacle in the vehicle's surrounding environment based on the two-dimensional coordinate values of the obstacle, and uses the Bezier curve for a radar warning line. The Bezier curve is fused with the panoramic bird's-eye view to obtain the radar warning display image, and the radar warning display image is output to the display unit of the vehicle for display, thereby realizing the display of the warning of obstacles around the vehicle. Compared with the traditional radar warning function, the present application optimizes the display effect of the radar warning obstacles, has good aesthetics, and a strong sense of technology, bringing driving and parking safety and driving pleasure to users.

Other features and advantages of the present application will be set forth in the description which follows.

### BRIEF DESCRIPTION OF THE DRAWINGS

In order to more clearly illustrate embodiments of the present application or technical solutions in a prior art, drawings required in the embodiments or a description of the prior art will be briefly introduced below. Obviously, the drawings in the following description are only some embodiments of the present application. For ordinary skilled in the art, other drawings can be obtained based on these drawings without paying creative work.
FIG. 1 is a flow chart of an early warning method for a vehicle radar according to an embodiment of the present application.
FIG. 2 is a schematic diagram of a first-degree Bezier curve.
FIG. 3 is a schematic diagram of a second-degree Bezier curve.
FIG. 4 is a schematic diagram of a third-degree Bezier curve.
FIG. 5 is a schematic diagram of a division of an area surrounding a vehicle in one embodiment of the present application.
FIG. 6 is a schematic diagram of a principle of selecting control points in one embodiment of the present application.
FIG. 7 is a structural diagram of an early warning system for a vehicle radar in one embodiment of the present application.

### DETAILED DESCRIPTION

The detailed description of the accompanying drawings is intended as an illustration of currently preferred embodiments of the present application, and is not intended to represent the only form in which the present application can be implemented. It should be understood that same or equivalent functions can be accomplished by different embodiments intended to be included in the scope of the present application.

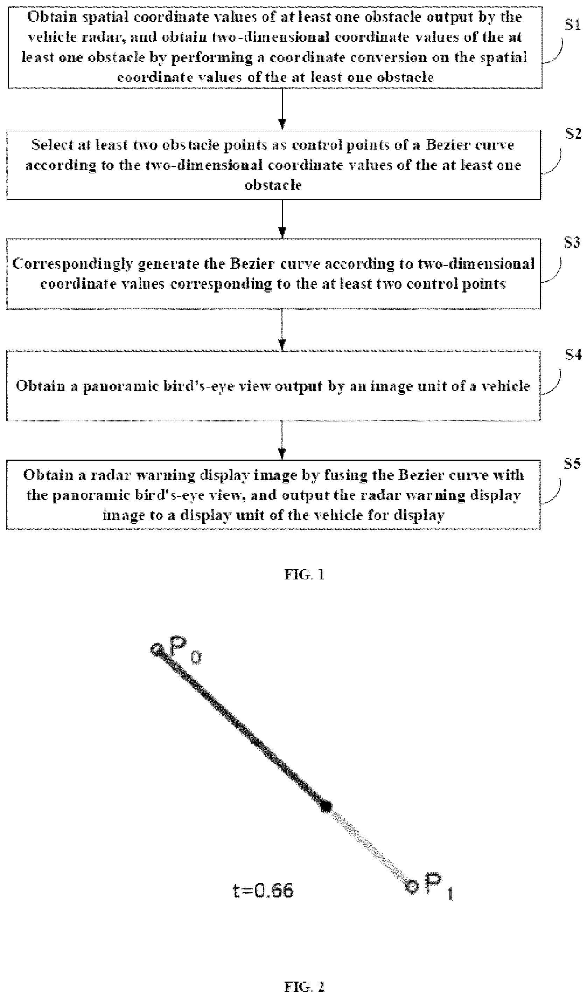

Referring to FIG. 1, an embodiment of the present application provides an early warning method for a vehicle radar, the method includes following steps:
Step S1, spatial coordinate values of at least one obstacle output by a vehicle radar are obtained, and two-dimensional coordinate values of the at least one obstacle are obtained by performing a coordinate transformation on the spatial coordinate values of the at least one obstacle.
Step S2, at least two obstacle points are selected as control points of a Bezier curve according to the two-dimensional coordinate values of the at least one obstacle.

Specifically, the Bezier curve includes a first-degree Bezier curve, a second-degree Bezier curve, a third degree Bezier curve, etc., which can be summarized as an nth-degree Bezier curve, where "n" is a positive integer greater than or equal to 1; where a generating of the nth-degree Bezier curve requires n+1 control points; since the Bezier curve to be generated in this embodiment is used as a radar warning curve for obstacles, the selection of a number of the control points in the step depends on a number and a structure of obstacles.

Among them, the first-degree Bezier curve is shown in FIG. 2. Assuming that control points are P₀ and P₁, the first-degree Bezier curve is just a straight line between the two points, and its function is: B(t)=P₀ +(P₁-P₀)t=(1-t)P₀ +tP₁, t ∈ [0,1], where both P₀, and P₁ represent horizontal coordinates or vertical coordinates.

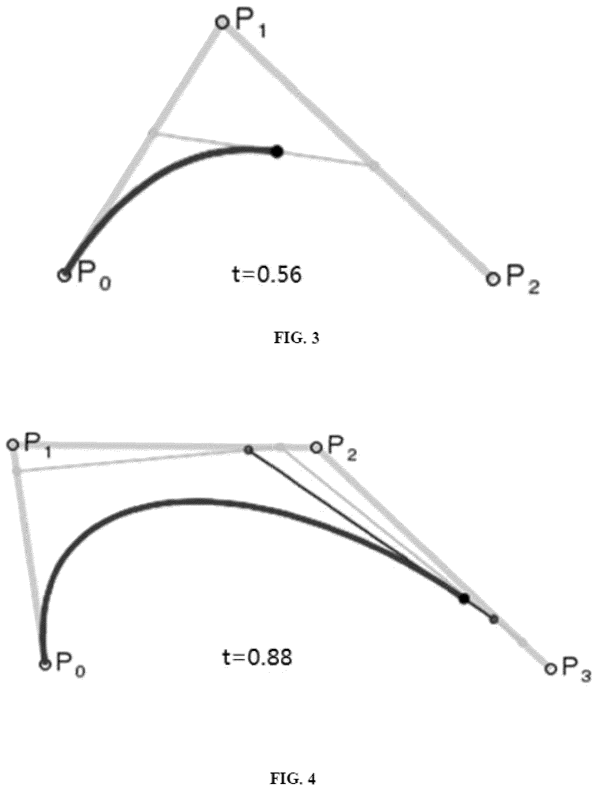

Among them, the second-degree Bezier curve is shown in FIG. 3. Assuming that control points are P₀, P₁, and P₂, its function is: B(t)= (1-t)² P₀ + 2t(1-t)P₁ +t² P₂, t ∈ [0,1], where P₀, P₁, and P₂ all represent horizontal coordinates or vertical coordinates.

The third-degree Bezier curve is shown in FIG4. Assuming that control points are P₀, P₁, P₂, and P₃, its function is:
B(t)=(1-t)³ P₀+3t(1-t)² P₁ +3t² (1-t)P₂ +t³ P₃, t∈ [0,1], where P₀, P₁, P₂, P₃ all represent the horizontal coordinates or vertical coordinates.

In summary, the function of the nth-order Bezier curve can be summarized as: P₀ⁿ=(1-t)P₀ⁿ⁻¹+tP₁ⁿ⁻¹, t E [0,1],

Step S3, the Bezier curve is generated correspondingly according to two-dimensional coordinate values corresponding to the at least two control points.

Step S4, a panoramic bird's-eye view output by an image unit of the vehicle is obtained.

Specifically, the image unit of the vehicle is used to stitch images of a surrounding environment of the vehicle collected by surround cameras of the vehicle to obtain the panoramic bird's-eye view; it should be understood that a generation of the panoramic bird's-eye view of the vehicle is a conventional method in a parking technology, so it will not be described in detail here;
Step S5, a radar warning display image is obtained by fusing the Bezier curve with the panoramic bird's-eye view, and the radar warning display image is output to a display unit of the vehicle for display.

Specifically, in this embodiment, the generated Bezier curve is used as a radar warning line, which is rendered and then superimposed on the panoramic bird's-eye view and output for displaying, so as to realize a display warning of obstacles around the vehicle.

The present application converts the spatial coordinate values of at least one obstacle detected by the vehicle radar into two-dimensional coordinate values, generates the Bezier curve about the obstacles in the vehicle's surrounding environment based on the two-dimensional coordinate values of the obstacle, and uses the Bezier curve as the radar warning line. The Bezier curve is fused with the panoramic bird's-eye view to obtain the radar warning display image, and the radar warning display image is output to the display unit of the vehicle for display, thereby realizing the display warning of obstacles around the vehicle. Compared with a traditional radar warning function, the present application optimizes a display effect of the radar warning of obstacles, has good aesthetics and a strong sense of technology, bringing driving and parking safety and driving pleasure to users.

In some embodiments, step S2 includes:
Step S21, a vehicle surrounding area where the at least one obstacle is located is determined according to the two-dimensional coordinate values of the at least one obstacle; where a surrounding environment of the vehicle is divided into a plurality of vehicle surrounding areas.

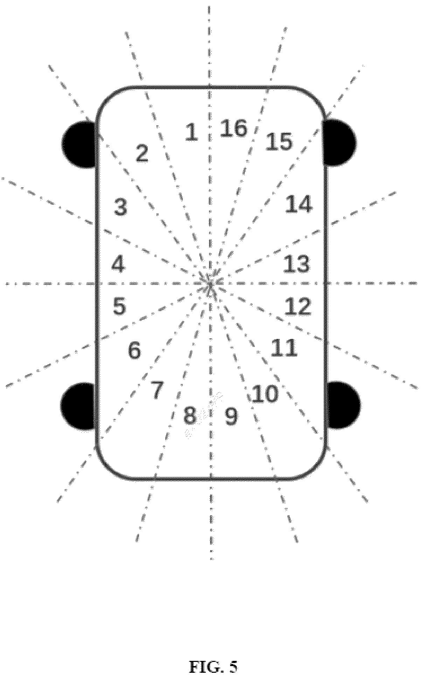

Specifically, for example, as shown in FIG. 5, the surrounding environment of the vehicle may be evenly divided into 16 sector areas with a center of the vehicle as a circle center a, and each sector area is one vehicle surrounding area.

Step S22, when there is at least one obstacle in one vehicle surrounding area and there is no obstacle in adj acent vehicle surrounding areas of the one vehicle surrounding area, at least two obstacle points are selected as a group of control points of the Bezier curve corresponding to the one vehicle surrounding area, according to the two-dimensional coordinate values of the at least one obstacle in the one vehicle surrounding area.

In some embodiments, step S2 includes:
Step S23, when there is at least one obstacle in each of at least two adjacent vehicle surrounding areas, at least two obstacle points are selected as a group of control points of the Bezier curve corresponding to the at least two adjacent vehicle surrounding areas, according to the two-dimensional coordinate values of the at least one obstacle in each of the at least two adjacent vehicle surrounding areas.

Specifically, in order to ensure an accuracy of a radar warning area, the corresponding Bezier curve is selected according to the number of obstacle points of the obstacles actually detected. If there is the obstacle in each of the at least two adjacent vehicle surrounding areas, a Bezier curve corresponding to the at least two adjacent vehicle surrounding areas is drawn by across areas. That is, the at least two adjacent vehicle surrounding areas are regarded as one area to calculate the Bezier curve, so as to ensure that an overall line effect of the radar warning line is beautiful.

In some embodiments, step S2 includes:
At least two obstacle points on the obstacle that are closest to an edge of the vehicle and are within a maximum boundary range on a two-dimensional projection surface are selected as control points of the Bezier curve.

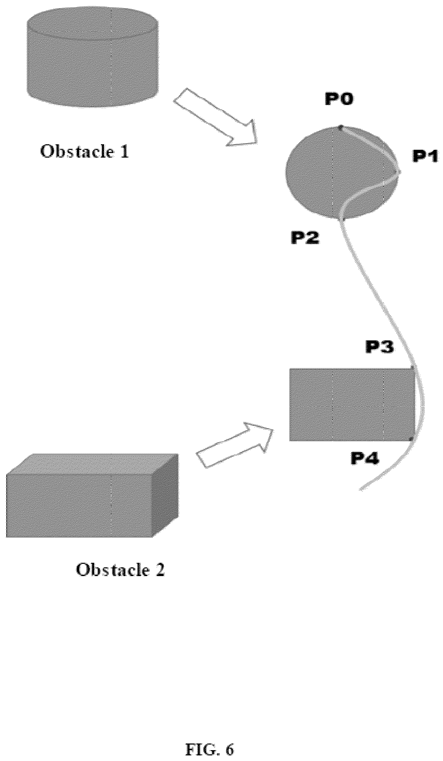

Specifically, as shown in FIG. 6, FIG. 6 shows a situation where there are two obstacles (an obstacle 1 and an obstacle 2) in a vehicle surrounding area Z, and obstacle points are selected for each obstacle. Specifically, for each obstacle, at least two obstacle points on the obstacle that are closest to the edge of the vehicle and are within the maximum boundary range on the two-dimensional projection plane are selected as control points of the Bezier curve. For example, obstacle points P₀, P₁, and P₂ are selected for the obstacle 1 in FIG. 6, and obstacle points P₃ and P₄ are selected for the obstacle 2. Finally, the selected obstacle points P₀, P₁, P₂, P₃, and P₄ are used as a group of control points of the Bezier curve corresponding to the vehicle surrounding area Z.

In some embodiments, step S3 includes:
One Bezier curve is generated correspondingly using each group of control points.

Specifically, for any one group of control points, when calculating the Bezier curve, a function of the Bezier curve is determined according to a total number of the control points in the one group. Assuming that the number of control points in one group of control points is m, a corresponding Bezier curve function is an (m-1)th-degree Bezier curve function.

Specifically, in the method of this embodiment, the spatial coordinate values of at least one obstacle detected by the vehicle radar are converted into two-dimensional coordinate values, and the two-dimensional coordinate values are divided into areas. Based on the two-dimensional coordinate values of the obstacle in each area, one or more Bezier curves of the obstacle in the vehicle's surrounding environment are generated. Finally, the one or more Bezier curves are fused with the panoramic bird's-eye view to obtain the radar warning display image, and the radar warning display image is output to the display unit of the vehicle for display, thereby realizing a display warning of dynamic continuous areas of obstacle warnings around the vehicle. Compared with the traditional radar warning function, the method of this embodiment optimizes the display effect of warning obstacles by radars. A warning of a dynamic connected area has a strong sense of design, good aesthetics, and a strong sense of technology. It can also warn more effectively of tiny obstacles, bringing driving and parking safety and driving pleasure to users.

In some embodiments, the vehicle radar includes a first reversing radar module disposed at a front of the vehicle, a second reversing radar module disposed at a rear of the vehicle, a first parking radar module disposed at a left of the vehicle, and a second parking radar module disposed at a right of the vehicle.

Specifically, each of the first reversing radar module, the second reversing radar module, the first parking radar module and the second parking radar module includes a plurality of radar sensors.

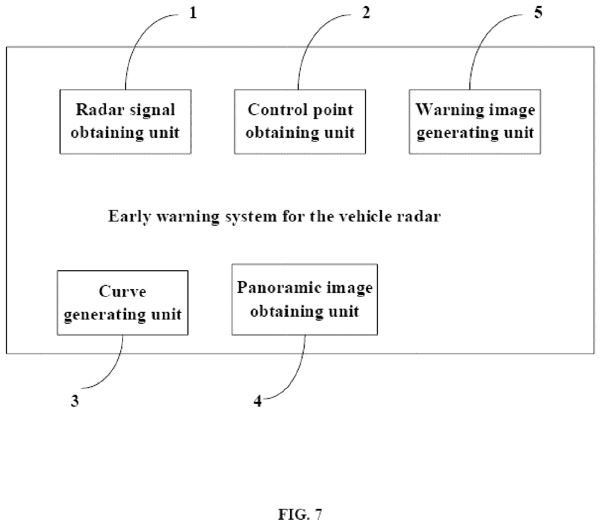

Corresponding to the early warning method for the vehicle radar of the above embodiment, another embodiment of the present application provides an early warning system for the vehicle radar. Referring to FIG. 7, the system of this embodiment includes:
A radar signal obtaining unit 1, configured to obtain the spatial coordinate values of at least one obstacle output by the vehicle radar, and obtain two-dimensional coordinate values of the at least one obstacle by performing the coordinate conversion on the spatial coordinate values of the at least one obstacle;
A control point obtaining unit 2, configured to select at least two obstacle points as control points of the Bezier curve according to the two-dimensional coordinate values of the at least one obstacle;
A curve generating unit 3, configured to correspondingly generate the Bezier curve according to two-dimensional coordinate values corresponding to the at least two control points;
A panoramic image obtaining unit 4, configured to obtain the panoramic bird's-eye view output by the image unit of the vehicle;
A warning image generating unit 5, configured to obtain the radar warning display image by fusing the Bezier curve with the panoramic bird's-eye view, and output the radar warning display image to the display unit of the vehicle for display.

In some embodiments, the control point obtaining unit 2 is configured to:
Determine a vehicle surrounding area where the at least one obstacle is located according to the two-dimensional coordinate values of the at least one obstacle; where the surrounding environment of the vehicle is divided into the plurality of vehicle surrounding areas;
When there is at least one obstacle in one vehicle surrounding area and there is no obstacle in adjacent vehicle surrounding areas of the one vehicle surrounding area, select at least two obstacle points as a group of control points of the Bezier curve corresponding to the one vehicle surrounding area according to the two-dimensional coordinate values of the at least one obstacle in the one vehicle surrounding area.

In some embodiments, the control point obtaining unit 2 is configured to:
When there is at least one obstacle in each of at least two adjacent vehicle surrounding areas, select at least two obstacle points as the group of control points of the Bezier curve corresponding to the at least two adjacent vehicle surrounding areas, according to the two-dimensional coordinate values of the at least one obstacle in each of the at least two adjacent vehicle surrounding areas.

In some embodiments, the control point obtaining unit 2 is configured to:
Select at least two obstacle points on the obstacle that are closest to the edge of the vehicle and are in the maximum boundary range on the two-dimensional projection surface as control points of the Bezier curve.

In some embodiments, the curve generating unit 3 is used to:
Correspondingly generate one Bezier curve using each group of control points.

In some embodiments, the vehicle radar includes a first reversing radar module disposed at the front of the vehicle, a second reversing radar module disposed at the rear of the vehicle, a first parking radar module disposed at the left of the vehicle, and a second parking radar module disposed at the right of the vehicle.

The early warning system for the vehicle radar of the embodiment described above is only illustrative, wherein the units described as separate components may or may not be physically separated, and the components of the units may or may not be physical units, that is, they may be located in one place, or may be distributed on multiple network units. Some or all of the units may be selected according to actual needs to achieve the purpose of the early warning system for the vehicle radar of the embodiment.

It should be noted that the early warning system for the vehicle radar of the above-mentioned embodiment corresponds to the early warning method for the vehicle radar of the above-mentioned embodiment. Therefore, undescribed parts of early warning system for the vehicle radar of the above-mentioned embodiment can be obtained by referring to the content of the early warning method for the vehicle radar of the above-mentioned embodiment, that is, the specific steps recorded in the early warning method for the vehicle radar of the above-mentioned embodiment can be understood as the functions that can be achieved by the early warning system for the vehicle radar of the above-mentioned embodiment, and will not be repeated here.

Furthermore, if the early warning system for the vehicle radar of the above-mentioned embodiment is implemented in the form of software function modules and sold or used as an independent product, it can be stored in a computer-readable storage medium.

Embodiment of the present application further provides a computer-readable storage medium, where the computer-readable storage medium stores a computer program, and when the computer program is executed by a processor, the early warning method for the vehicle radar as described in the above embodiment is implemented.

Specifically, the computer-readable storage medium may include: any entity or recording medium, a USB flash drive, a mobile hard disk, a magnetic disk, an optical disk, a computer memory, a read-only memory (ROM), a random access memory (RAM), an electrical carrier signal, a telecommunication signal, and a software distribution medium, etc., that can carry the computer program instructions.

Another embodiment of the present application provides an electronic device, including a processor, a storage device, and a computer program stored in the storage device and executable on the processor, where the processor implements the early warning method for the vehicle radar described in the above embodiment when executing the computer program.

Where, the electronic device may also include a bus connecting different components (including the storage device and the processor). The storage device may include a computer-readable medium in the form of a volatile storage device, such as a random access memory (RAM) and/or a cache memory. The storage device may also include at least one program product, which has a group of (e.g., at least one) program modules, which are configured to perform the functions of the various embodiments of the present application. The electronic device may also communicate with one or more external devices (e.g., keyboards, pointing devices, displays, etc.), may also communicate with one or more devices that enable a user to interact with the electronic device, and/or communicate with any device (e.g., a network card) that enables the electronic device to communicate with one or more other computing devices, such communication may be performed through an input/output (I/O) interface, and the electronic device may also communicate with one or more networks (e.g., local area networks (LANs), wide area networks (WANs) and/or public networks, such as the Internet) through a network adapter.

The embodiments of the present application have been described above, and the above description is exemplary, not exhaustive, and is not limited to the disclosed embodiments. Many modifications and variations will be apparent to those skilled in the art without departing from the scope of the described embodiments. The terms used herein are selected to best explain the principles of the embodiments, practical applications, or technical improvements in the market, or to enable skilled in the art to understand the embodiments disclosed herein.

## Claims

1. An early warning method for a vehicle radar, comprising:
obtaining spatial coordinate values of at least one obstacle output by the vehicle radar, and obtaining two-dimensional coordinate values of the at least one obstacle by performing a coordinate conversion on the spatial coordinate values of the at least one obstacle;
**characterized in that**, a surrounding environment of the vehicle is evenly divided into a plurality of sector areas with a center of the vehicle as a circle center, each sector area being a vehicle surrounding area;
for each vehicle surrounding area that comprises at least one obstacle determined based on the two-dimensional coordinate values of the at least one obstacle:
when adjacent vehicle surrounding areas of said vehicle surrounding area comprise no obstacle, from obstacle points on the at least one obstacle in said vehicle surrounding area, selecting at least two obstacle points as a group of control points of a Bezier curve corresponding to said vehicle surrounding area;
when each of at least two adjacent vehicle surrounding areas comprises at least one obstacle, treating said at least two adjacent vehicle surrounding areas as one area and, from obstacle points on the at least one obstacle in each of said at least two adjacent vehicle surrounding areas, selecting at least two obstacle points as a group of control points of a Bezier curve corresponding to said at least two adjacent vehicle surrounding areas;
generating the Bezier curve according to the two-dimensional coordinate values corresponding to the group of control points;
obtaining a panoramic bird's-eye view output by an image unit of a vehicle; and
obtaining a radar warning display image by fusing the Bezier curve with the panoramic bird's-eye view, and outputting the radar warning display image to a display unit of the vehicle for display.

2. The early warning method for the vehicle radar according to claim 1, wherein selecting at least two obstacle points as control points of the Bezier curve comprises:
selecting at least two obstacle points on the obstacle that are closest to an edge of the vehicle and are in a maximum boundary range on a two-dimensional projection surface as the control points of the Bezier curve.

3. The early warning method for the vehicle radar according to claim 1, wherein generating the Bezier curve comprises:
for each said group of control points, correspondingly generating one Bezier curve.

4. The early warning method for the vehicle radar according to claim 1, wherein the vehicle radar comprises a first reversing radar module arranged at a front of the vehicle, a second reversing radar module arranged at a rear of the vehicle, a first parking radar module arranged at a left of the vehicle, and a second parking radar module arranged at a right of the vehicle.

5. An early warning system for a vehicle radar, comprising:
a radar signal obtaining unit (1), configured to obtain spatial coordinate values of at least one obstacle output by the vehicle radar, and obtain two-dimensional coordinate values of the at least one obstacle by performing a coordinate conversion on the spatial coordinate values of the at least one obstacle, **characterized in that**, a surrounding environment of the vehicle is evenly divided into a plurality of sector areas with a center of the vehicle as a circle center, each sector area being a vehicle surrounding area;
a control point obtaining unit (2), configured to for each vehicle surrounding area that comprises at least one obstacle determined based on the two-dimensional coordinate values of the at least one obstacle: when adjacent vehicle surrounding areas of said vehicle surrounding area comprise no obstacle, from obstacle points on the at least one obstacle in said vehicle surrounding area, selecting at least two obstacle points as a group of control points of a Bezier curve corresponding to said vehicle surrounding area; when each of at least two adjacent vehicle surrounding areas comprises at least one obstacle, treating said at least two adjacent vehicle surrounding areas as one area and, from obstacle points on the at least one obstacle in each of said at least two adjacent vehicle surrounding areas, selecting at least two obstacle points as a group of control points of a Bezier curve corresponding to said at least two adjacent vehicle surrounding areas;
a curve generating unit (3), configured to generate the Bezier curve according to the two-dimensional coordinate values corresponding to the group of control points;
a panoramic image obtaining unit (4), configured to obtain a panoramic bird's-eye view output by an image unit of a vehicle; and
a warning image generating unit (5), configured to obtain a radar warning display image by fusing the Bezier curve with the panoramic bird's-eye view, and output the radar warning display image to a display unit of the vehicle for display.

6. The early warning system for the vehicle radar according to claim 5, wherein the control point obtaining unit (2) is further configured to select at least two obstacle points on the obstacle that are closest to an edge of the vehicle and are in a maximum boundary range on a two-dimensional projection surface as the control points of the Bezier curve; and
the curve generating unit (3) is configured to, for each said group of control points, correspondingly generate one Bezier curve.

7. The early warning system for the vehicle radar according to any one of claims 5 to 6, wherein the vehicle radar comprises a first reversing radar module arranged at a front of the vehicle, a second reversing radar module arranged at a rear of the vehicle, a first parking radar module arranged at a left of the vehicle, and a second parking radar module arranged at a right of the vehicle.

8. A computer-readable storage medium, **characterized in that**, the computer-readable storage medium stores a computer program, and when the computer program is executed by a processor, the early warning method for the vehicle radar according to any one of claims 1 to 4 is implemented.

9. An electronic device, **characterized in that**, the electronic device comprises a processor, a storage device, and a computer program stored in the storage device and executable on the processor, wherein when the processor executes the computer program, the early warning method for the vehicle radar according to any one of claims 1 to 4 is implemented.

## Patentansprüche

1. Ein Verfahren zur Fahrzeugradarfrühwarnung, umfassend:
Erhalten von Raumkoordinatenwerten mindestens eines vom Fahrzeugradar ausgegebenen Hindernisses und Erhalten von zweidimensionalen Koordinatenwerten des mindestens einen Hindernisses durch Durchführen einer Koordinatentransformation an den Raumkoordinatenwerten des mindestens einen Hindernisses;
**dadurch gekennzeichnet, dass**
eine Umgebung des Fahrzeugs mit einem Zentrum des Fahrzeugs als Kreismittelpunkt gleichmäßig in eine Vielzahl von Sektorbereichen unterteilt ist, wobei jeder Sektorbereich ein Fahrzeugumgebungsbereich ist;
für jeden Fahrzeugumgebungsbereich, der mindestens ein basierend auf den zweidimensionalen Koordinatenwerten des mindestens einen Hindernisses bestimmtes Hindernis umfasst:
wenn benachbarte Fahrzeugumgebungsbereiche des besagten Fahrzeugumgebungsbereichs kein Hindernis umfassen, Auswählen von mindestens zwei Hindernispunkten aus Hindernispunkten auf dem mindestens einen Hindernis in dem besagten Fahrzeugumgebungsbereich als eine Gruppe von Kontrollpunkten einer dem besagten Fahrzeugumgebungsbereich entsprechenden Bezier-Kurve;
wenn jeder von mindestens zwei benachbarten Fahrzeugumgebungsbereichen mindestens ein Hindernis umfasst, Behandeln der besagten mindestens zwei benachbarten Fahrzeugumgebungsbereiche als einen Bereich und, aus Hindernispunkten auf dem mindestens einen Hindernis in jedem der besagten mindestens zwei benachbarten Fahrzeugumgebungsbereiche, Auswählen von mindestens zwei Hindernispunkten als eine Gruppe von Kontrollpunkten einer den besagten mindestens zwei benachbarten Fahrzeugumgebungsbereichen entsprechenden Bezier-Kurve;
Erzeugen der Bezier-Kurve gemäß den der Gruppe von Kontrollpunkten entsprechenden zweidimensionalen Koordinatenwerten;
Erhalten einer von einer Bildeinheit eines Fahrzeugs ausgegebenen Panoramavogelperspektive; und
Erhalten eines Radarwarnanzeigebildes durch Fusionieren der Bezier-Kurve mit der Panoramavogelperspektive und Ausgeben des Radarwarnanzeigebildes an eine Anzeigeeinheit des Fahrzeugs zur Anzeige.

2. Das Verfahren zur Fahrzeugradarfrühwarnung nach Anspruch 1, wobei das Auswählen von mindestens zwei Hindernispunkten als Kontrollpunkte der Bezier-Kurve umfasst:
Auswählen von mindestens zwei Hindernispunkten auf dem Hindernis, die einem Rand des Fahrzeugs am nächsten sind und sich in einem maximalen Grenzbereich auf einer zweidimensionalen Projektionsfläche befinden, als die Kontrollpunkte der Bezier-Kurve.

3. Das Verfahren zur Fahrzeugradarfrühwarnung nach Anspruch 1, wobei das Erzeugen der Bezier-Kurve umfasst:
für jede besagte Gruppe von Kontrollpunkten, entsprechendes Erzeugen einer Bezier-Kurve.

4. Das Verfahren zur Fahrzeugradarfrühwarnung nach Anspruch 1, wobei das Fahrzeugradar ein erstes Rückfahrradarmodul, das an einer Vorderseite des Fahrzeugs angeordnet ist, ein zweites Rückfahrradarmodul, das an einer Rückseite des Fahrzeugs angeordnet ist, ein erstes Parkradarmodul, das an einer linken Seite des Fahrzeugs angeordnet ist, und ein zweites Parkradarmodul, das an einer rechten Seite des Fahrzeugs angeordnet ist, umfasst.

5. Ein System zur Fahrzeugradarfrühwarnung, umfassend:
eine Radarsignal-Erfassungseinheit (1), die dazu konfiguriert ist, Raumkoordinatenwerte mindestens eines vom Fahrzeugradar ausgegebenen Hindernisses zu erhalten und zweidimensionale Koordinatenwerte des mindestens einen Hindernisses durch Durchführen einer Koordinatentransformation an den Raumkoordinatenwerten des mindestens einen Hindernisses zu erhalten, **dadurch gekennzeichnet, dass** eine Umgebung des Fahrzeugs mit einem Zentrum des Fahrzeugs als Kreismittelpunkt gleichmäßig in eine Vielzahl von Sektorbereichen unterteilt ist, wobei jeder Sektorbereich ein Fahrzeugumgebungsbereich ist;
eine Kontrollpunkt-Erfassungseinheit (2), die dazu konfiguriert ist, für jeden Fahrzeugumgebungsbereich, der mindestens ein basierend auf den zweidimensionalen Koordinatenwerten des mindestens einen Hindernisses bestimmtes Hindernis umfasst: wenn benachbarte Fahrzeugumgebungsbereiche des besagten Fahrzeugumgebungsbereichs kein Hindernis umfassen, aus Hindernispunkten auf dem mindestens einen Hindernis in dem besagten Fahrzeugumgebungsbereich mindestens zwei Hindernispunkte als eine Gruppe von Kontrollpunkten einer dem besagten Fahrzeugumgebungsbereich entsprechenden Bezier-Kurve auszuwählen; wenn jeder von mindestens zwei benachbarten Fahrzeugumgebungsbereichen mindestens ein Hindernis umfasst, die besagten mindestens zwei benachbarten Fahrzeugumgebungsbereiche als einen Bereich zu behandeln und aus Hindernispunkten auf dem mindestens einen Hindernis in jedem der besagten mindestens zwei benachbarten Fahrzeugumgebungsbereiche mindestens zwei Hindernispunkte als eine Gruppe von Kontrollpunkten einer den besagten mindestens zwei benachbarten Fahrzeugumgebungsbereichen entsprechenden Bezier-Kurve auszuwählen;
eine Kurvenerzeugungseinheit (3), die dazu konfiguriert ist, die Bezier-Kurve gemäß den der Gruppe von Kontrollpunkten entsprechenden zweidimensionalen Koordinatenwerten zu erzeugen;
eine Panoramabild-Erfassungseinheit (4), die dazu konfiguriert ist, eine von einer Bildeinheit eines Fahrzeugs ausgegebene Panoramavogelperspektive zu erhalten; und
eine Warnbild-Erzeugungseinheit (5), die dazu konfiguriert ist, ein Radarwarnanzeigebild durch Fusionieren der Bezier-Kurve mit der Panoramavogelperspektive zu erhalten und das Radarwarnanzeigebild an eine Anzeigeeinheit des Fahrzeugs zur Anzeige auszugeben.

6. Das System zur Fahrzeugradarfrühwarnung nach Anspruch 5, wobei die Kontrollpunkt-Erfassungseinheit (2) ferner dazu konfiguriert ist, mindestens zwei Hindernispunkte auf dem Hindernis, die einem Rand des Fahrzeugs am nächsten sind und sich in einem maximalen Grenzbereich auf einer zweidimensionalen Projektionsfläche befinden, als die Kontrollpunkte der Bezier-Kurve auszuwählen; und
die Kurvenerzeugungseinheit (3) dazu konfiguriert ist, für jede besagte Gruppe von Kontrollpunkten entsprechend eine Bezier-Kurve zu erzeugen.

7. Das System zur Fahrzeugradarfrühwarnung nach einem der Ansprüche 5 bis 6, wobei das Fahrzeugradar ein erstes Rückfahrradarmodul, das an einer Vorderseite des Fahrzeugs angeordnet ist, ein zweites Rückfahrradarmodul, das an einer Rückseite des Fahrzeugs angeordnet ist, ein erstes Parkradarmodul, das an einer linken Seite des Fahrzeugs angeordnet ist, und ein zweites Parkradarmodul, das an einer rechten Seite des Fahrzeugs angeordnet ist, umfasst.

8. Ein computerlesbares Speichermedium, **dadurch gekennzeichnet, dass** das computerlesbare Speichermedium ein Computerprogramm speichert und, wenn das Computerprogramm von einem Prozessor ausgeführt wird, das Verfahren zur Fahrzeugradarfrühwarnung nach einem der Ansprüche 1 bis 4 implementiert wird.

9. Eine elektronische Vorrichtung, **dadurch gekennzeichnet, dass** die elektronische Vorrichtung einen Prozessor, eine Speichervorrichtung und ein Computerprogramm, das in der Speichervorrichtung gespeichert und auf dem Prozessor ausführbar ist, umfasst, wobei, wenn der Prozessor das Computerprogramm ausführt, das Verfahren zur Fahrzeugradarfrühwarnung nach einem der Ansprüche 1 bis 4 implementiert wird.

## Revendications

1. Un procédé d'alerte précoce par radar de véhicule, comprenant:
l'obtention de valeurs de coordonnées spatiales d'au moins un obstacle délivrées par le radar de véhicule, et l'obtention de valeurs de coordonnées bidimensionnelles de l'au moins un obstacle en effectuant une conversion de coordonnées sur les valeurs de coordonnées spatiales de l'au moins un obstacle;
**caractérisé en ce que**,
un environnement périphérique du véhicule est uniformément divisé en une pluralité de zones de secteur avec un centre du véhicule comme centre de cercle, chaque zone de secteur étant une zone environnante du véhicule;
pour chaque zone environnante du véhicule qui comprend au moins un obstacle déterminé sur la base des valeurs de coordonnées bidimensionnelles de l'au moins un obstacle:
lorsque des zones environnantes du véhicule adjacentes à ladite zone environnante du véhicule ne comprennent aucun obstacle, à partir de points d'obstacle sur l'au moins un obstacle dans ladite zone environnante du véhicule, la sélection d'au moins deux points d'obstacle en tant que groupe de points de contrôle d'une courbe de Bézier correspondant à ladite zone environnante du véhicule;
lorsque chacune d'au moins deux zones environnantes du véhicule adjacentes comprend au moins un obstacle, le traitement desdites au moins deux zones environnantes du véhicule adjacentes comme une seule zone et, à partir de points d'obstacle sur l'au moins un obstacle dans chacune desdites au moins deux zones environnantes du véhicule adjacentes, la sélection d'au moins deux points d'obstacle en tant que groupe de points de contrôle d'une courbe de Bézier correspondant auxdites au moins deux zones environnantes du véhicule adjacentes;
la génération de la courbe de Bézier selon les valeurs de coordonnées bidimensionnelles correspondant au groupe de points de contrôle;
l'obtention d'une vue panoramique à vol d'oiseau délivrée par une unité d'image d'un véhicule; et
l'obtention d'une image d'affichage d'alerte radar par la fusion de la courbe de Bézier avec la vue panoramique à vol d'oiseau, et la transmission de l'image d'affichage d'alerte radar à une unité d'affichage du véhicule pour un affichage.

2. Le procédé d'alerte précoce par radar de véhicule selon la revendication 1, dans lequel la sélection d'au moins deux points d'obstacle en tant que points de contrôle de la courbe de Bézier comprend:
la sélection d'au moins deux points d'obstacle sur l'obstacle qui sont les plus proches d'un bord du véhicule et qui se trouvent dans une plage de limite maximale sur une surface de projection bidimensionnelle en tant que points de contrôle de la courbe de Bézier.

3. Le procédé d'alerte précoce par radar de véhicule selon la revendication 1, dans lequel la génération de la courbe de Bézier comprend:
pour chaque dit groupe de points de contrôle, la génération correspondante d'une courbe de Bézier.

4. Le procédé d'alerte précoce par radar de véhicule selon la revendication 1, dans lequel le radar de véhicule comprend un premier module de radar de recul agencé à l'avant du véhicule, un second module de radar de recul agencé à l'arrière du véhicule, un premier module de radar de stationnement agencé à la gauche du véhicule, et un second module de radar de stationnement agencé à la droite du véhicule.

5. Un système d'alerte précoce par radar de véhicule, comprenant:
une unité d'obtention de signal radar (1), configurée pour obtenir des valeurs de coordonnées spatiales d'au moins un obstacle délivrées par le radar de véhicule, et obtenir des valeurs de coordonnées bidimensionnelles de l'au moins un obstacle en effectuant une conversion de coordonnées sur les valeurs de coordonnées spatiales de l'au moins un obstacle, **caractérisé en ce que**, un environnement périphérique du véhicule est uniformément divisé en une pluralité de zones de secteur avec un centre du véhicule comme centre de cercle, chaque zone de secteur étant une zone environnante du véhicule;
une unité d'obtention de point de contrôle (2), configurée pour, pour chaque zone environnante du véhicule qui comprend au moins un obstacle déterminé sur la base des valeurs de coordonnées bidimensionnelles de l'au moins un obstacle: lorsque des zones environnantes du véhicule adjacentes à ladite zone environnante du véhicule ne comprennent aucun obstacle, à partir de points d'obstacle sur l'au moins un obstacle dans ladite zone environnante du véhicule, sélectionner au moins deux points d'obstacle en tant que groupe de points de contrôle d'une courbe de Bézier correspondant à ladite zone environnante du véhicule; lorsque chacune d'au moins deux zones environnantes du véhicule adjacentes comprend au moins un obstacle, traiter lesdites au moins deux zones environnantes du véhicule adjacentes comme une seule zone et, à partir de points d'obstacle sur l'au moins un obstacle dans chacune desdites au moins deux zones environnantes du véhicule adjacentes, sélectionner au moins deux points d'obstacle en tant que groupe de points de contrôle d'une courbe de Bézier correspondant auxdites au moins deux zones environnantes du véhicule adjacentes;
une unité de génération de courbe (3), configurée pour générer la courbe de Bézier selon les valeurs de coordonnées bidimensionnelles correspondant au groupe de points de contrôle;
une unité d'obtention d'image panoramique (4), configurée pour obtenir une vue panoramique à vol d'oiseau délivrée par une unité d'image d'un véhicule; et
une unité de génération d'image d'alerte (5), configurée pour obtenir une image d'affichage d'alerte radar par la fusion de la courbe de Bézier avec la vue panoramique à vol d'oiseau, et transmettre l'image d'affichage d'alerte radar à une unité d'affichage du véhicule pour un affichage.

6. Le système d'alerte précoce par radar de véhicule selon la revendication 5, dans lequel l'unité d'obtention de point de contrôle (2) est en outre configurée pour sélectionner au moins deux points d'obstacle sur l'obstacle qui sont les plus proches d'un bord du véhicule et qui se trouvent dans une plage de limite maximale sur une surface de projection bidimensionnelle en tant que points de contrôle de la courbe de Bézier; et
l'unité de génération de courbe (3) est configurée pour, pour chaque dit groupe de points de contrôle, générer de manière correspondante une courbe de Bézier.

7. Le système d'alerte précoce par radar de véhicule selon l'une quelconque des revendications 5 à 6, dans lequel le radar de véhicule comprend un premier module de radar de recul agencé à l'avant du véhicule, un second module de radar de recul agencé à l'arrière du véhicule, un premier module de radar de stationnement agencé à la gauche du véhicule, et un second module de radar de stationnement agencé à la droite du véhicule.

8. Un support de stockage lisible par ordinateur, **caractérisé en ce que**, le support de stockage lisible par ordinateur stocke un programme informatique, et lorsque le programme informatique est exécuté par un processeur, le procédé d'alerte précoce par radar de véhicule selon l'une quelconque des revendications 1 à 4 est mis en œuvre.

9. Un dispositif électronique, **caractérisé en ce que**, le dispositif électronique comprend un processeur, un dispositif de stockage, et un programme informatique stocké dans le dispositif de stockage et exécutable sur le processeur, dans lequel lorsque le processeur exécute le programme informatique, le procédé d'alerte précoce par radar de véhicule selon l'une quelconque des revendications 1 à 4 est mis en œuvre.
